(19) **Europäisches Patentamt**

**European Patent Office**

**Office européen des brevets**

(11) **EP 0 978 708 B1**

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(51) Int Cl.$^7$: **G01D 5/38**, G01D 5/347

(21) Anmeldenummer: **99113954.4**

(22) Anmeldetag: **17.07.1999**

(54) **Rotatorische Positionsmesseinrichtung**

Rotary encoder

Codeur rotatif

(84) Benannte Vertragsstaaten:
**CH DE FR GB IT LI**

(30) Priorität: **01.08.1998 DE 19834860**
**21.05.1999 DE 19923505**

(43) Veröffentlichungstag der Anmeldung:
**09.02.2000 Patentblatt 2000/06**

(73) Patentinhaber: **Dr. Johannes Heidenhain GmbH**
**83292 Traunreut (DE)**

(72) Erfinder:
 • **Holzapfel, Wolfgang, Dr.-Ing.**
 **83119 Obing (DE)**
 • **Michel, Dieter**
 **83278 Traunstein (DE)**

(56) Entgegenhaltungen:
**EP-A- 0 163 362      EP-A- 0 564 683**
**EP-A- 0 577 104      EP-A- 0 735 346**
**US-A- 5 079 418**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine rotatorische Positionsmeßeinrichtung basierend auf einem interferentiellen Wirkungsprinzip.

Ein sogenannter interferentieller Dreigittergeber ist beispielsweise aus der EP 0 163 362 B1 oder aber aus der Veröffentlichung Längen in der Ultrapräzisionstechnik messen" von A. Spies in Feinwerktechnik & Messtechnik 98 (1990), 10, S. 406 - 410 bekannt. Mit Hilfe eines derartigen Dreigittergebers können verschiebungsabhängig modulierte Inkrementalsignale erzeugt werden, über die die Relativposition zweier zueinander beweglicher Objekte bestimmbar ist. Eines der beiden zueinander beweglichen Objekte ist hierbei mit einer Abtasteinheit verbunden, die unter anderem eine Abtastteilungsstruktur umfaßt. Das andere Objekt ist dagegen mit einer Meßteilungsstruktur verbunden, die von der Abtasteinheit zur Erzeugung der positionsabhängigen Signale abgetastet wird. Während als Abtastteilungsstruktur ein transparentes Phasengitter dient, ist ein Reflexions-Phasengitter als Meßteilungsstruktur vorgesehen.

Derartige, im Auflicht betriebene interferentielle Dreigittergeber haben nunmehr ihren sogenannten neutralen Drehpunkt üblicherweise in der Ebene der Abtastteilungsstruktur. Hierbei sei unter dem neutralen Drehpunkt derjenige Punkt bezeichnet, um den entweder die Meßteilungsstruktur oder aber die Abtastoptik einschließlich der Abtastteilungsstruktur in einem bestimmten Toleranzbereich gekippt werden kann, ohne daß sich das ausgegebene Positionssignal in seiner Lage verändert. Wünschenswert ist aber grundsätzlich, den neutralen Drehpunkt in einen Bereich zu verlegen, in dem eventuell auftretende Schwingungen oder Verkippungen der jeweiligen Struktur im Meßbetrieb einen möglichst geringen Einfluß auf die resultierende Meßgenauigkeit aufweisen. Insbesondere im Fall einer rotatorischen Positionsmeßeinrichtung basierend auf einem derartigen interferentiellen Wirkungsprinzip wäre wünschenswert, daß der neutrale Drehpunkt in der Ebene der rotierenden Teilungsstruktur bzw. Teilscheibe liegt, da die Teilscheibe grundsätzlich Verkippungen, Taumelbewegungen etc. aufgrund von Lagertoleranzen unterliegt.

Aus der EP 577 104 ist ein hochauflösender optischer Drehgeber bekannt, der eine Teilscheibe mit mehreren konzentrischen Spuren umfasst, in denen in codierter Form Positionsinformationen durch eine geeignete Abtastung auszulesen sind.

Die US 5,079,418 offenbart eine hochauflösende optische Positionsmesseinrichtung basierend auf einem interferentiellen Mehrgitter-Wirkungsprinzip, bei dem abtastseitig ein Retroreflektor-Element zum Einsatz kommt. Hinweise auf die geeignete Ausbildung einer rotatorischen, schwingungsunempfindlichen Positionsmesseinrichtung sind dieser Druckschrift nicht zu entnehmen.

Aus der EP 564 683 ist bekannt, auf der Abtastseite beispielsweise eines optischen Drehgebers einen sog. Chip-on-Glass-Aufbau vorzusehen, um derart ein einfach zu fertigendes, unempfindliches Gesamtsystem aufzubauen.

In der EP 735 346 ist femer offenbart, in einer lichtelektrischen Positionsmesseinrichtung zumindest in einem der an der Abtastung beteiligten Gitter eine transversal zur Messrichtung orientierte Teilungsstruktur vorzusehen. Hinweise zur Lösung von spezifischen Problemen bei rotatorischen interferentiellen Positionsmesseinrichtungen sind dieser Druckschrift nicht zu entnehmen.

Aufgabe der vorliegenden Erfindung ist es, eine rotatorische Positionsmeßeinrichtung nach dem interferentiellen Wirkungsprinzip anzugeben, die im Meßbetrieb möglichst unempfindlich gegenüber Schwingungen des Gehäuses und/oder Verkippungen einer rotierenden Teilscheibe ist.

Diese Aufgabe wird gelöst durch eine rotatorische Positionsmeßeinrichtung mit den Merkmalen des Anspruches 1.

Vorteilhafte Ausführungsformen der erfindungsgemäßen Vorrichtung ergeben sich aus den Maßnahmen, die in den abhängigen Patentansprüchen aufgeführt sind.

Der vorliegenden Erfindung liegt zunächst die Erkenntniss zugrunde, daß der erwähnte neutrale Drehpunkt zur Erfüllung der angegebenen Anforderungen in der Ebene der rotierenden Teilungsstruktur, d.h. in der Ebene der Teilscheibe liegen muß. Nur derart kann die entsprechende Positionsmeßeinrichtung unempfindlich gegenüber Taumelbewegungen der Teilscheibe werden, die etwa durch Schwingungen des Gehäuses oder aber Lagertoleranzen verursacht werden. Die oben erwähnte Ausgestaltung des interferentiellen Dreigittergebers mit einer Reflexions-Phasenstruktur als Meßteilungstruktur muß demzufolge erfindungsgemäß derart abgewandelt werden, daß die rotierende Teilscheibe mit einer transparenten Meßteilungsstruktur versehen wird, während die erforderliche reflektierende Abtastteilungsstruktur stationär angeordnet ist.

Erfindungsgemäß ist nunmehr zum einen vorgesehen, die Meßteilungsstruktur als transparentes Phasengitter auszubilden und auf der rotierenden Teilscheibe kreisringförmig anzuordnen. Zum anderen wird die als Reflexions-Phasengitter ausgebildete Abtastteilungsstruktur stationär und flächig unmittelbar am schwingungsunempfindlichen Gehäuse der rotatorischen Positionsmeßeinrichtung angeordnet. Gegenüberliegend zur Abtastteilungsstruktur ist eine Abtastbaueinheit ebenfalls stationär am Gehäuse angeordnet, die unter anderem eine Lichtquelle sowie ein oder mehrere Detektorelemente umfaßt, über die die positionsabhängig modulierten Signale erfaßt werden.

Über die erfindungsgemäß gewählte Anordnung der Abtastteilungsstruktur unmittelbar am jeweiligen Gehäuse läßt sich in einfachster Art und Weise eine schwingungsunempfindliche Anordnung dieses Teiles der Positionsmeßeinrichtung sicherstellen. Hierbei existieren eine Reihe von Möglichkeiten, wie letztlich die Anordnung der Abtastteilungstruktur an dieser Stelle erfolgen kann.

Weniger kritisch im Hinblick auf die Anfälligkeit gegenüber eventuellen Schwingungen und Vibrationen ist hingegen die Lage bzw. Anordnung der Abtastbaueinheit mit der Lichtquelle und den Detektorelementen. Diese Baueinheit wird deshalb erfindungsgemäß auf der dem Gehäuse abgewandten Seite der Teilscheibe bzw. Meßteilungsstruktur angeordnet.

Es resultiert somit eine hochgenaue rotatorische Positionsmeßeinrichtung, basierend auf einem interferentiellen Wirkungsprinzip, die zum einen einfach und kompakt baut und zum anderen unempfindlich gegenüber unvermeidbaren mechanischen Einflüssen ist.

Weitere Vorteile sowie Einzelheiten der erfindungsgemäßen rotatorischen Positionsmeßeinrichtung ergeben sich aus der nachfolgenden Beschreibung eines Ausführungsbeispiels anhand der beiliegenden Figuren.

Dabei zeigt

Figur 1 eine schematische Querschnitts-Darstellung durch ein Ausführungsbeispiel der erfindungsgemäßen rotatorischen Positionsmeßeinrichtung;

Figur 2 den prinzipiellen Strahlengang innerhalb der erfindungsgemäßen Positionsmeßeinrichtung gemäß Figur 1;

Figur 3a eine Draufsicht auf die Teilscheibe aus dem Ausführungsbeispiel der Figur 1 mit der radial angeordneten Meßteilungsstruktur;

Figur 3b eine Schnittdarstellung der Meßteilungsstruktur aus Figur 3a;

Figur 4a eine Draufsicht auf die Abtastteilungsstruktur aus dem Ausführungsbeispiel der Figur 1;

Figur 4b eine Schnittdarstellung der Abtastteilungsstruktur aus Figur 4a;

Figur 5 eine vergrößerte Ansicht der Abtastbaueinheit aus Figur 1;

Figur 6 eine Ansicht der Detektorebene der Abtastbaueinheit aus Figur 5.

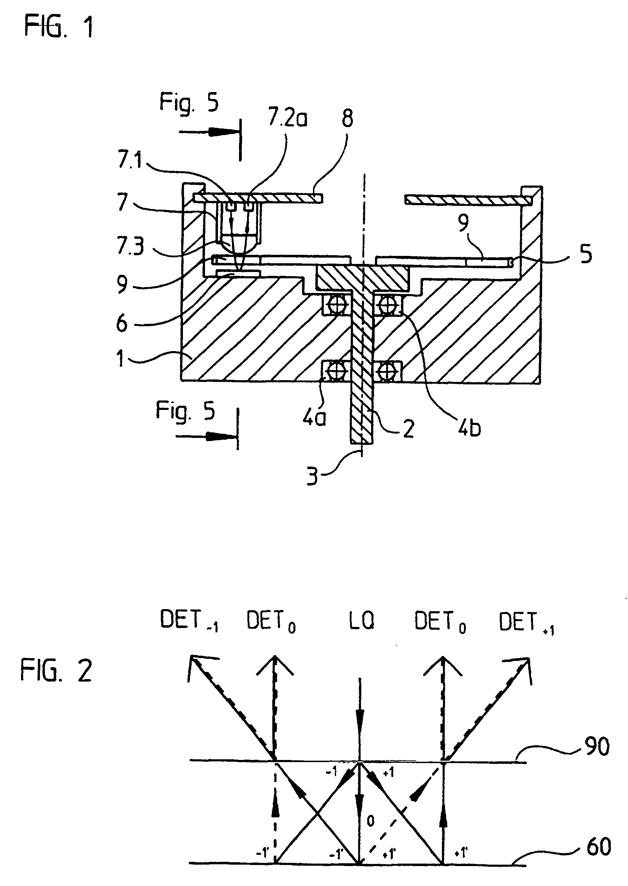

Eine mögliche Ausführungsform der erfindungsgemäßen rotatorischen Positionsmeßeinrichtung sei nachfolgend anhand der schematischen Querschnittsdarstellung in Figur 1 beschrieben. Erkennbar ist im wesentlichen der Flansch des Gehäuses 1 der Positionsmeßeinrichtung, in dem eine Welle 2 drehbar um ihre Längsachse 3 gelagert angeordnet ist. Das Gehäuse 1 ist hierbei zylinderförmig ausgebildet. Im dargestellten Ausführungsbeispiel wird die Welle 3 über zwei Lager 4a, 4b im Gehäuse 1 möglichst reibungsfrei drehbar angeordnet; hierbei sei darauf hingewiesen, daß die Lagerung der Welle 3 im Gehäuse 1 keineswegs erfindungswesentlich ist. Die Welle 3 wiederum ist z.B. über eine geeignete Kupplung mit einem Antrieb, einer Spindel etc. verbunden, deren Rotationsbewegung über die erfindungsgemäße Positionsmeßeinrichtung jeweils erfaßt werden soll. Letztere Elemente sind aus Gründen der Übersichtlichkeit nicht dargestellt. An demjenigen Ende der Welle 3, welches der Positionsmeßeinrichtung zugewandt ist, ist symmetrisch zur Längs- bzw. Rotationsachse 3 eine kreisförmige Teilscheibe 5 starr befestigt, was z.B. über eine - nicht gezeigte - Schraubverbindung erfolgen kann. Die Teilscheibe 5 trägt zumindest eine Spur mit einer radial angeordneten Meßteilungsstruktur 9, die in der Ansicht von Figur 1 nur schematisch angedeutet ist und auf die nachfolgend noch näher eingegangen wird. Die optische Abtastung dieser Spur bzw. Meßteilungsstruktur 9 liefert die gewünschten positionsabhängigen Inkrementalsignale, welche z.B. von einer nachgeordneten numerischen Steuerung in bekannter Art und Weise weiterverarbeitet werden können.

Unmittelbar am Gehäuse 1 der Positionsmeßeinrichtung ist erfindungsgemäß eine Abtastteilungsstruktur 6 flächig angeordnet, was in Figur 1a lediglich ebenso schematisch angedeutet wurde wie der eigentliche AbtastStrahlengang. Details hierzu werden nachfolgend noch näher erläutert. Gegenüberliegend von der Abtastteilungsstruktur 6 ist eine Abtastbaueinheit 7 über eine Platine 8 starr am Gehäuse 1 angeordnet. Die Abtastbaueinheit 7 umfaßt u.a. eine Lichtquelle 7.1, vorzugsweise mehrere optoelektronische Detektorelemente 7.2a, von denen in Figur 1 lediglich eines angedeutet ist, sowie eine Optik 7.3, die als Kollimator bzw. Kondensor fungiert.

Die Abtastbaueinheit 7 ist hierbei über die seitlichen Gehäuse-Wände mit dem eigentlichen Gehäuse 1 verbunden. Es ergibt sich dadurch eine deutlich schwingungsempfindlichere Anordnung dieses Elementes der erfindungsgemäßen Positionsmeßeinrichtung, da die Gehäuse-Wände in der Regel nicht derart massiv ausgebildet sind, daß Schwingungen der Platine 8 sicher vermieden werden könnten.

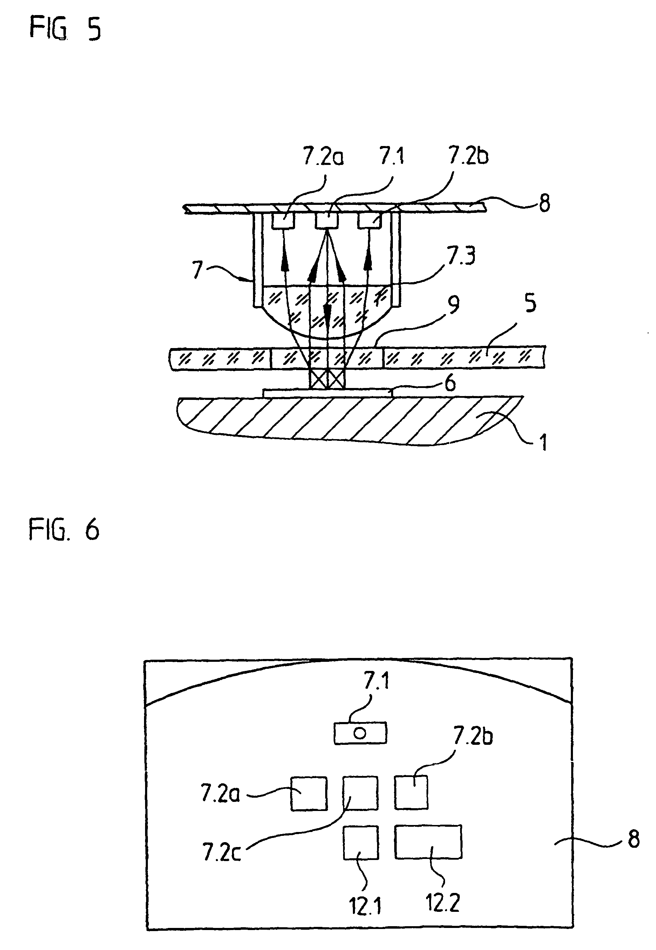

Über die Platine 8 erfolgt zum einen die möglichst starre Verbindung der Abtastbaueinheit 7 mit dem Gehäuse 1. Zum anderen werden die in der Abtastbaueinheit 7 angeordneten Bauelemente über die Platine 8 und die darin befindlichen elektrischen Leiterbahnen kontaktiert. Figur 1 zeigt den Aufbau der Abtastbaueinheit 7 lediglich in stark schematisierter Form. Eine vergrößerte Ansicht hiervon ist etwa in Figur 5 gezeigt; ein Schnitt durch die Detektorebene der Abtastbaueinheit 7 sei nachfolgend anhand von Figur 6 noch näher beschrieben.

Zwischen der Abtastbaueinheit 7 und der Abtastteilungsstruktur 6 ist demzufolge die um die Achse 3 rotierende Teilscheibe 5 mit der Meßteilungsstruktur 9 angeordnet, aus deren optischer Abtastung letztlich die gewünschten, positionsabhängig modulierten Signale erzeugt werden, die von den Detektorelementen 7.1 erfaßt werden.

Der grundsätzliche Abtaststrahlengang in der erfindungsgemäßen rotatorischen Positionsmeßeinrichtung ist in Figur 2 schematisiert dargestellt. Die von einer Lichtquelle LQ emittierten Strahlenbündel gelangen hierbei zunächst auf die Meßteilungsstruktur 90, die als Transmissions-Phasenstruktur ausgebildet ist. Dort erfolgt eine Aufspaltung der auftreffenden Strahlenbündel in die Teilstrahlenbündel 0. sowie +/- 1. Beugungsordnung. Die Teilstrahlenbündel 0, +1 und -1 treffen anschließend auf die stationäre Abtastteilungsstruktur 60 auf. Die Abtastteilungsstruktur 60 ist als Reflexions-Phasenstruktur ausgebildet, die eine Rückreflexion der auftreffenden Teilstrahlenbündel 0, +1, -1 in die +/- 1. Beugungsordnungen und damit zurück in Richtung der beweglichen Meßteilungsstruktur 90 bewirkt. Dort kommen letztlich verschiedene Teilstrahlenbündel +1', -1' zur Interferenz, wobei die resultierenden Interferenzstrahlenbündel durch die Beugungswirkung der Meßteilungsstruktur 90 in die verschiedenen Raumrichtungen abgelenkt werden, in denen die Detektorelemente $DET_0$, $DET_{+1}$ und $DET_{-1}$ angeordnet sind, d.h. demzufolge in die resultierende 0., sowie +/- 1. Beugungsordnung. Im Fall der rotatorischen Relativbewegung von Meßteilungsstruktur 90 und Abtastteilungsstruktur 60 resultieren aufgrund der verschiedenen Phasenverschiebungen der an der Interferenz beteiligten Teilstrahlenbündel +1', -1' letztlich intensitätsmodulierte Inkrementalsignale auf Seiten der Detektorelemente $DET_0$, $DET_{+1}$ und $DET_{-1}$, die jeweils um 120° zueinander phasenverschoben sind und zur hochexakten Positionsbestimmung in bekannter Art und Weise genutzt werden können.

Im Gegensatz zur bekannten Ausbildung eines interferentiellen Dreigittergebers mit einer Reflexions-Phasenstruktur als Meßteilungsstruktur ist erfindungsgemäß nunmehr vorgesehen, die Meßteilungsstruktur 90 als Transmissions-Phasenstruktur auszubilden. Desweiteren wird erfindungsgemäß die Abtastteilungsstruktur 60 als Reflexions-Phasenstruktur ausgestaltet, während konventionelle interferentielle Dreigittergeber gemäß der EP 0 163 362 B2 immer eine Abtastteilungsstruktur in Form einer Transmissions-Phasenstruktur vorsehen. Aufgrund dieser Maßnahmen wird letztlich erreicht, daß der neutrale Drehpunkt der erfindungsgemäßen Positionsmeßeinrichtung in der Ebene der beweglichen bzw. rotierenden Meßteilungsstruktur 90, d.h. in der Ebene der Teilscheibe liegt. Auch eventuelle Verkippungen oder ein Taumeln der entsprechenden Teilscheibe mit der Meßteilungsstruktur 90 beeinflußen die Lage der positionsabhängigen Signale nun nicht mehr.

Als weiterhin vorteilhaft erweist sich, wenn wie anhand von Figur 1 erläutert, die Abtastteilungsstruktur 6 möglichst unmittelbar flächig am Gehäuse der Positionsmeßeinrichtung angeordnet wird, so daß eine besonders schwingungsunempfindliche Anordnung der Abtastteilungsstruktur 6 resultiert. Eventuelle undefinierte Lageänderungen auf Seiten der Abtastteilungsstruktur 6, etwa verursacht durch Vibrationen etc., hätten zur Folge, daß damit die Positionsmessung verfälscht würde und letztlich auch die Genauigkeit der Positionsbestimmung negativ beeinflußt wird.

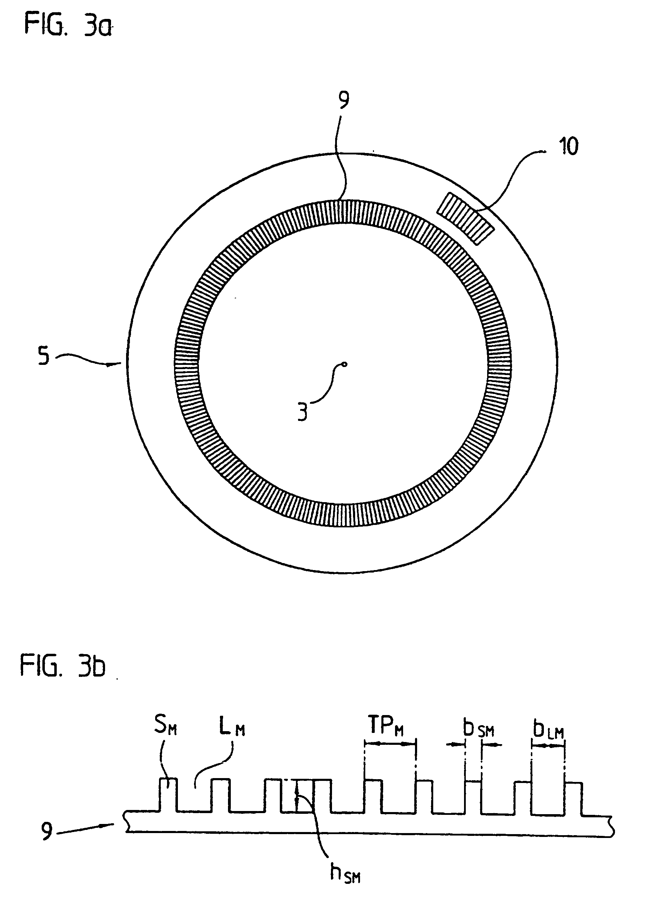

Eine Draufsicht auf die verwendete Teilscheibe 5 im Ausführungsbeispiel der Figur 1 ist in Figur 3a gezeigt. Erkennbar ist hierbei die radialsymmetrische Anordnung der Spur mit der Meßteilungsstruktur 9 um die Rotationsachse 3, wobei wie erwähnt die Meßteilungsstruktur 9 als transparente Phasenstruktur ausgebildet ist. Zu Details dieser Phasenstruktur sei auf die nachfolgend beschriebene Figur 3b verwiesen, die eine Schnittansicht der Meßteilungsstruktur 9 zeigt. Neben der Spur mit der Meßteilungsstruktur 9 ist im gezeigten Ausführungsbeispiel noch ein benachbart zu dieser Spur angeordnetes Referenzmarkierungsfeld 10 auf der Teilscheibe 9 erkennbar. Über die optische Abtastung des Referenzmarkierungsfeldes 10 läßt sich in bekannter Art und Weise ein Referenzimpulssignal an einer definierten Position erzeugen, d.h. ein Absolutbezug bei der rotatorischen Positionsmessung herstellen.

Neben der dargestellten Variante mit lediglich einem einzigen Referenzmarkierungsfeld 10 bzw. einer einzigen Spur mit einer Meßteilungsstruktur können selbstverständlich auch vielfältigste Abwandlungen von dieser Konfiguration erfindungsgemäß realisiert werden. So können ggf. auch mehrere gleichbeabstandete Referenzmarkierungsfelder ebenso vorgesehen werden wie z.B. abstandscodierte Referenzmarkierungsfelder. Auch wäre es möglich, mehrere Meßteilungsstrukturen mit unterschiedlichen Teilungsperioden benachbart zueinander auf der Teilscheibe anzuordnen usw..

Anhand der Schnittansicht in Figur 3b sei die als transparente Phasenstruktur ausgebildete Meßteilungsstruktur 9 nachfolgend näher erläutert.

So besteht die Meßteilungsstruktur 9 aus einer Abfolge periodisch bzw. alternierend angeordneter Stege $S_M$ und Lücken $L_M$.

Im Hinblick auf die Herstellung der Meßteilungsstruktur gibt es dabei eine Reihe von Möglichkeiten. In einer bevorzugten Ausführungsform ist vorgesehen, die Meßteilungsstruktur 9 durch Trockenätzen in Quarz herzustellen. Als Trägersubstrat wird hierbei entweder direkt ein Quarz-Substrat verwendet oder aber eine dünne Quarzschicht auf ein transparentes Glas- oder Kunststoff-Trägersubstrat aufgebracht. Das jeweilige Trägersubstrat dient in diesem Fall dann auch als Ätzstop für den Trockenätzprozeß.

Alternativ hierzu wäre eine kostengünstige Fertigung der Meßteilungsstruktur 9 auch über ein Prägeverfahren möglich, ähnlich dem Herstellungsprozeß von CDs.

Die Teilungsperiode $TP_M$ der Meßteilungsstruktur 9 entspricht hierbei der Summe der Breiten $b_{SM}$, $b_{LM}$ eines Steges $S_M$ und einer Lücke $L_M$, d.h. $TP_M = b_{SM} + b_{LM}$. Im dargestellten Ausführungsbeispiel wurde die Stegbreite $b_{SM} = 1/3\ TP_M$ gewählt, für die Lückenbreite $b_{LM}$ gilt dann $b_{LM} = 2/3\ TP_M$.
Alternativ hierzu wäre es auch möglich die Stegbreite bSM = 2/3 TPM zu wählen; entsprechend würde dann für die Lückenbreite $b_{LM}$, dann bLM = 1/3 $TP_M$ gelten.

Die Steghöhe $h_{SM}$ oder Phasentiefe wird für das gezeigte Ausführungsbeispiel eines Stufenphasengitters vorzugsweise nach folgender Beziehung gewählt:

$$h_{SM}(n - 1) \approx \lambda/3$$

wobei n den Brechungsindex des Stegmateriales angibt und λ die Wellenlänge der eingesetzten Lichtquelle. Die Phasentiefe wird demzufolge abweichend von 180° gewählt, vorzugsweise 120°. Hierzu ist etwa eine Steghöhe $h_{SM}$ von λ/6 vorzusehen.

In einer bevorzugten Ausführungsform der erfindungsgemäßen rotatorischen Positionsmeßeinrichtung weist die kreisförmig auf der Teilscheibe angeordnete Meßteilungsstruktur 9 einen Durchmesser von 40mm auf. Über den kompletten Kreisumfang sind 32768 Teilungsperioden der Meßteilungsstuktur aufgebracht, so daß pro Umdrehung 65536 Signalperioden der Ausgangssignale resultieren. Für die Teilungsperiode $T_{PM}$ gilt dann $T_{PM} = 3,83\mu m$, während $b_{SM} = 1,28\mu m$, $b_{LM} = 2,55\mu m$ oder aber $b_{SM} = 2,55\mu m$, $b_{LM} = 1,28\mu m$ gewählt wird. Bei einer Wellenlänge λ = 860nm und n= 1,5 ergibt sich für die Steghöhe $h_{SM}$ gemäß den obigen Beziehungen desweiteren $h_{SM} = 0,57\mu m$.

Über derart gewählte Breiten der Stege $S_M$ und Lücken $L_M$ der transparenten Phasenstruktur bzw. Meßteilungsstruktur 9 sowie der Steghöhe $h_{SM}$ bzw. Phasentiefe ergibt sich in Verbindung mit der gewählten interferentiellen Signalerzeugung letztlich eine Phasenverschiebung der über die drei Detektorelemente registrierten Signale von 120°.

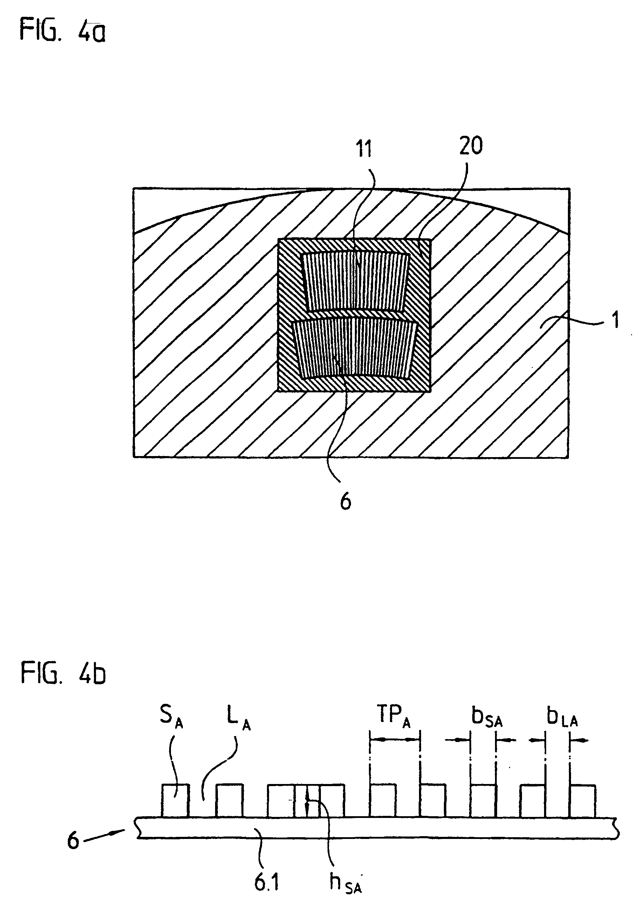

Anhand der Figuren 4a und 4b sei nachfolgend die Ausbildung der Abtastteilungsstruktur 6 aus dem Ausführungsbeispiel der Figur 1 näher erläutert. Figur 4a zeigt hierbei eine Draufsicht auf die unmittelbar am Gehäuse 1 bzw. Flansch angeordnete Abtastteilungsstruktur 6, die sich in diesem Ausführungsbeispiel lediglich über ein beschränktes Kreissegment erstreckt. Wie bereits oben erwähnt ist die Abtastteilungsstruktur 6 als Reflexions-Phasengitter ausgebildet, das in Figur 4b im Querschnitt gezeigt ist. Die Abtastteilungsstruktur 6 besteht aus einer periodischen Anordnung von reflektierenden Stegen $S_A$, die auf einer ebenfalls reflektierenden Oberfläche eines Trägerkörpers 6.1 aufgebracht werden. Es kann sich hierbei etwa um Stege $S_A$ aus Chrom auf einem Stahl-Trägerkörper 6.1 handeln. Zur Erhöhung der Reflexion kann die Oberseite der Abtastteilungsstruktur 6 desweiteren flächig mit Aluminiuium, Aluminiumoxid oder mit Gold beschichtet werden.

Die Breite $b_{SA}$ der Stege $S_A$ wird hierbei identisch zur Breite $b_{LA}$ der dazwischen liegenden Lücken $L_A$ gewählt, d.h. die Breite der Stege und Lücken entspricht jeweils der halben Teilungsperiode $T_{PA}$. Die Höhe $h_{SA}$ bzw. die Phasentiefe der Stege $S_A$ der Abtastteilungsstruktur 6 wird vorzugsweise gemäß

$$h_{SA} \approx \lambda/4$$

gewählt, was einer Phasentiefe von 180° entspricht. λ gibt wiederum die Wellenlänge der eingesetzten Strahlung an; für λ = 860nm resultiert somit im beschriebenen Ausführungsbeispiel eine Steghöhe $h_{SA} = 215nm$. Im Fall der oben erwähnten 32768 Teilungsperioden der Meßteilungsstruktur ist desweiteren $b_{SA} = b_{LA} = 1,915\mu m$ vorgesehen.
Um eine gute Qualität der resultierenden Abtastsignale sicherzustellen, ist es desweiteren vorteilhaft, wenn eine definierte Blendenstruktur im Abtaststrahlengang angeordnet wird. Andernfalls sinkt der Modulationsgrad der Abtastsignale aufgrund von auftretender Störstrahlung. Damit wiederum wird der Offset der einzelnen Abtastsignale beeinträchtigt, da die Störstrahlung über den kompletten Verschiebeweg bzw. die Meßstrecke nicht konstant ist. Vorzugsweise wird deshalb bei der erfindungsgemäßen Positionsmeßeinrichtung eine Blendenstruktur auf Seiten der Abtastteilungsstruktur 6 vorgesehen, wie dies auch im Ausführungsbeispiel in Fig. 4a angedeutet ist. Dort ist die Oberfläche des Trägerkörpers benachbart zu den beiden Abtaststrukturen 6, 11 jeweils stark absorbierend ausgebildet. Dies erfolgt durch Aufbringen einer stark absorbierenden Schicht 20 in den radial und tangential zu den beiden Abtaststrukturen 6, 11 benachbarten Bereichen des Trägerkörpers, so daß diese Bereiche letztlich als Blendenstruktur 20 dienen. Die neben der Abtastteilungsstruktur 6 vorgesehene zweite Abtaststruktur 11 dient hierbei zur Abtastung des Referenzmarkierungsfeldes neben der Spur mit der Meßteilungstruktur und damit zur Erzeugung mindestens eines Referenzimpulssignales. Die zweite Abtaststruktur sei deshalb nachfolgend als Referenzimpuls-Abtaststruktur 11 bezeichnet.

Alternativ hierzu wäre es auch möglich, eine mechanische Blende als Blendenstruktur in geeigneter Form im Strahlengang zwischen der Abtastbaueinheit 7 und der Teilscheibe 5 anzuordnen. Grundsätzlich wäre es desweiteren denkbar, die Blendenstruktur auf Seiten der Teilscheibe anzuordnen, was jedoch einen größeren Aufwand erfordert, da die Blendenstruktur dann in einem größeren Bereich vorzusehen wäre als im Fall der Anordnung benachbart zur Abtastteilungsstruktur, die räumlich lediglich einen kleinen Bereich einnimmt.

In Bezug auf die Abtastung des Referenzmarkierungsfeldes existieren eine Reihe bekannter Möglichkeiten, die allesamt eingesetzt werden können und auf die an dieser Stelle nicht näher eingegangen werden soll. Vorteilhafterweise könnten etwa etwa sog. gechirpte Strukturen zur Erzeugung der Referenzimpulssignale eingesetzt werden.

Wie bereits mehrfach angedeutet, wird die Abtastteilungsstruktur 6 unmittelbar flächig am Gehäuse 5 der Positionsmeßeinrichtung angeordnet, um derart eine möglichst schwingungsunempfindliche Anordnung derselben sicherzustellen. Dies erfolgt im gezeigten Ausführungsbeispiel derart, daß der Trägerkörper 6.1 mit den darauf angeordneten Stegen $S_A$ flächig auf das Gehäuse 5 geklebt wird.

Alternativ hierzu wäre auch denkbar, die Abtastteilungsstruktur direkt flächig am Gehäuse anzuordnen, was etwa durch eine geeignete Strukturierung der Oberfläche des Gehäuses erfolgen könnte, z.B. in Form eines geeigneten Ätzprozesses. Die Abtastteilungsstruktur wäre dann integraler Bestandteil des Gehäuses. Diese Anordnung der flächigen Anordnung der Abtastteilungsstruktur am Gehäuse hätte den Vorteil, daß im Fall einer Erwärmung des Gehäuses auch die Abtastteilung radialsymmetrisch expandiert und damit die in Winkeleinheiten gemessene Teilungsperiode termperaturunabhängig bleibt. Da das gleiche auch für die Teilscheibe gilt, treten keine temperaturabhängigen Vernier- und/oder Moiréstreifen auf und die Abtastsignale bleiben stets stabil.

Den gleichen Effekt bzw. Vorteil erzielt man im übrigen auch, wenn die reflektierende Abtastteilungsstruktur auf einem dünnen Trägerkörper aufgebracht wird, der einen kleinen Elastiziätsmodul aufweist und eine hohe Bruchdehnung besitzt. Der Trägerkörper inclusive Abtastteilungstruktur wird dann durch eine feste, flächige Klebung am Gehäuse befestigt, so daß die Abtastteilungstruktur damit gezwungenermaßen das gleiche thermische Ausdehnungsverhalten erfährt wie das Gehäuse. So könnte die Abtastteilungsstruktur etwa als geeignete Prägung auf einer dünnen Kunststoff- oder Metall-Folie als Trägerkörper ausgebildet werden, der vor der Prägung auf das Gehäuse geklebt wird.

Darüberhinaus wäre es auch möglich mehrere separate Abtastteilungsstrukturen über den Umfang des Gehäuses verteilt anzuordnen. Hierbei erweist sich ebenfalls als vorteilhaft, wenn zwischen dem Gehäuse und der eigentlichen Abtastteilungsstruktur ein Ausgleichskörper angeordnet wird. Auf dem Ausgleichskörper ist dann die eigentliche Abtastteilungsstruktur auf einem Trägerkörper angeordnet, d.h. der Trägerkörper ist fest und flächig mit dem Ausgleichskörper verbunden. Der Ausgleichskörper ist andererseits mit dem Gehäuse derart verbunden, z.B. durch ein geeignete Klebung, daß die Verdrehsicherheit des Ausgleichskörpers gegenüber dem Gehäuse im Fall thermischer Ausdehung gewährleistet ist. Trotzdem erfolgt die Befestigung des Ausgleichskörpers dergestalt, daß dieses sich radial verschieben kann.

Als Ausgleichskörper kann beispielsweise eine geeignet dimensionierte Scheibe aus Glas oder Stahl in Frage kommen. Auf diesem wiederum ist die Abtastteilungsstruktur auf einem Glas-Trägerkörper wie beschrieben angeordnet.

In einer weiteren vorteilhaften Ausführungsform ist es möglich, die Abtastteilungsstruktur in Form einer sog. Sol-Gel-Struktur auszubilden und flächig auf dem Gehäuse bzw. dem Flansch anzuordnen. Derartige Herstellungsverfahren für feine Strukturen sind z.B. in der WO 93/06508 beschrieben.

Ein Teil der erfindungsgemäßen Positionsmeßeinrichtung ist in Figur 5 in einer seitlichen Schnittansicht entlang der tangentialen Richtung vergrößert dargestellt. Erkennbar ist hierbei insbesondere, daß in diesem Ausführungsbeispiel die Abtastbaueinheit 7 neben einer Lichtquelle 7.1, vorzugsweise ausgebildet als LED, mehrere Detektorelemente 7.2a - 7.2b umfaßt; ein weiteres, drittes Detektorelement befindet sich verdeckt hinter der Lichtquelle 7.1 und ist in dieser Ansicht nicht erkennbar. Über die drei Detektorelemente, vorzugsweise ausgebildet als Photoelemente werden demzufolge die verschiebungsabhängig-intensitätsmodulierten Signale detektiert, die nach dem zweiten Durchgang durch die Meßteilungsstruktur 9 in die 0. sowie +/-1. resultierende Beugungsordnung abgelenkt werden, wobei in diesen Raumrichtungen die entsprechenden Detektorelemente 7.2a, 7.2b angeordnet sind. Daneben umfaßt die Abtastbaueinheit 7 desweiteren Detektorelemente, welche zur Erzeugung eines Referenzimpulssignales dienen, die aber in der Darstellung der Figur 5 nicht erkennbar sind. Die weiteren Elemente der Abtastbaueinheit 7 wurden bereits in der Beschreibung der Figur 1 erwähnt.

Eine Ansicht der Detektorebene der Abtastbaueinheit 7 ist schließlich in Figur 6 gezeigt. Neben der Lichtquelle 7.1 sind hierbei zum einen die drei vorher erwähnten, auf der Platine 8 angeordneten Detektorelemente 7.2a, 7.2b, 7.2c erkennbar, über die die von der Meßteilungsstruktur in die 0. sowie +/-1. Beugungsordnung abgelenkten interferierenden Strahlenbündel detektiert werden. Zum anderen sind in dieser Darstellung noch zwei weitere Detektorelemente 12.1, 12.2 erkennbar, die zur Erzeugung des Referenzimpulssignales dienen und demzufolge den oben erwähnten Referenzimpuls-Strukturen zugeordnet sind. Während hierbei über ein erstes Detektorelement 12.1 in bekannter Art und Weise ein sogenanntes Takt-Referenzimpulssignal erzeugt wird, dient das zweite Detektorelement 12.2 zur Erzeugung des Gegentakt-Referenzimpulssignales. Durch die geeignete Verschaltung dieser beiden Detektorelemente 12.1, 12.2 läßt sich ein von Störungen weitgehend unbeeinflußtes Referenzimpulssignal an einer definierten Absolutposition erzeugen.

Um dabei die aus der Spur mit der Meßteilungsstruktur kommenden Strahlenbündel von denjenigen Strahlenbündeln zu trennen, die aus dem Referenzmarkierungsfeld stammen, sind geeignete optische Ablenkelemente zwischen der in Figur 1 und 5 erkennbaren Optik 7.3 und der Abtastteilungsstruktur 6 anzuordnen. Aus Gründen der besseren Übersichtlichkeit wurde auf die Darstellung dieser Ablenkelemente jedoch verzichtet. Es kann sich hierbei etwa um geeignete Prismen oder aber Mehrsegment-Linsen mit zueinander verschobenen optischen Achsen handeln.

Neben dem dargestellten Ausführungsbeispiel der erfindungsgemäßen rotatorischen Positionsmeßeinrichtung sind selbstverständlich auch noch alternative Varianten im Rahmen der Lehre der vorliegenden Erfindung realisierbar.

So ist es keineswegs zwingend die Abtastteilungstruktur lediglich über ein Kreissegment anzuordnen; es kann vielmehr auch eine Anordnung derselben über den gesamten Kreisumfang vorgesehen werden. Daneben könnte auch vorgesehen werden, mehrere Abtastteilungsstrukturen mit unterschiedlichen Teilungsperioden auf der Gehäuseseite anzuordnen, um auf diese Art und Weise je nach genutzter Abtastteilungsstruktur unterschiedliche Signalperioden der positionsabhängigen Signale zu erzeugen. Diese könnten dann etwa in verschiedenen Kreissegmentbereichen am Gehäuse angeordnet werden. Auf diese Art und Weise ließen sich standardisierte Gehäuse zur Erzeugung verschiedener Teilungsperioden einsetzen, was eine Reduzierung von Herstellkosten zur Folge hätte.

Desweiteren erweist sich als vorteilhaft, wenn die Richtung der Beleuchtungsachse entsprechend dem Ausführungsbeispiel in Figur 1 radial nach innen gerichtet gewählt wird und nicht exakt parallel zur Rotationsachse der Teilscheibe oder aber nach außen hin. Auf diese Art und Weise ergeben sich kleinere Phasenverschiebungen zwischen den interferierenden Teilstrahlenbündeln, so daß die die Signalmodulationen vermindernden Moiré- und Verniereffekte vernachlässigbar klein gehalten werden.

Desweiteren sei schließlich darauf hingewiesen, daß neben dem beschriebenen Ausführungsbeispiel selbstverständlich auch alternative rotatorische Konfigurationen einer Positionsmeßeinrichtung erfindungsgemäß ausgestaltet werden können.

**Patentansprüche**

1. Rotatorische Positionsmeßeinrichtung nach dem interferentiellen Wirkungsprinzip, bestehend aus

   - einem Gehäuse (1),
   - einer mit dem Gehäuse (1) verbundenen Abtastbaueinheit (7), die eine Lichtquelle (7.1) sowie mindestens ein Detektorelement (7.2a, 7.2b, 7.2c; $DET_0$, $DET_{+1}$, $DET_{-1}$) umfaßt,
   - einer unmittelbar am schwingungsunempfindlichen Gehäuse (1) angeordneten Reflexions-Abtastteilungsstruktur (6, 60) die gegenüberliegend von der Abtastbaueinheit (7) angeordnet ist,
   - einer Teilscheibe (5), die mit einer drehbaren Welle (2) verbunden ist und eine radiale Transmissions-Meßteilungsstruktur (9, 90) aufweist, wobei die Teilscheibe (5) drehbar um ihre Symmetrieachse (3) im Gehäuse (1) angeordnet ist, so daß sich die Meßteilungsstruktur (9, 90) zwischen der Abtastbaueinheit (7) und der Abtastteilungsstruktur (6, 60) befindet und
   - die Anordnung der Lichtquelle (7.1) und der Meßteilungsstruktur derart gewählt ist, dass die von der Lichtquelle (7.1) emittierten Strahlenbündel zunächst auf die Meßteilungsstruktur (9, 90) gelangen, dort eine Aufspaltung in gebeugte Teilstrahlenbündel (0, +1, -1) verschiedener Ordnungen erfolgt, die gebeugten Teilstahlenbündel (0, +1, -1) auf die Abtastteilungsstruktur (6, 60) auftreffen, wo unter Reflexion eine erneute Beugung in verschiedene Beugungsordnungen erfolgt und eine Rückreflexion der gebeugten Teilstrahlenbündel (+ 1', - 1') in Richtung der Meßteilungsstruktur (9, 90) resultiert, wo die gebeugten Teilstrahlenbündel (+ 1', -1') interferieren und über das mindestens eine Detektorelement (7.2a, 7.2b, 7.2c; $DET_0$, $DET_{+1}$, $DET_{-1}$) eine Erfassung der interferierenden Teilstrahlenbündel erfolgt.

2. Rotatorische Positionsmeßeinrichtung nach Anspruch 1, wobei die Abtastteilungsstruktur (6, 60) flächig am Gehäuse (1) befestigt ist.

3. Rotatorische Positionsmeßeinrichtung nach Anspruch 2, wobei die Abtastteilungsstruktur (6, 60) geklebt am Gehäuse (1) befestigt ist.

4. Rotatorische Positionsmeßeinrichtung nach Anspruch 1, wobei die Abtastteilungsstruktur (6, 60) lediglich in einem Kreissgement angeordnet ist.

5. Rotatorische Positionsmeßeinrichtung nach Anspruch 1, wobei die Abtastteilungsstruktur kreisringförmig am Gehäuse angeordnet ist.

6. Rotatorische Positionsmeßeinrichtung nach Anspruch 1, wobei die Abtastteilungsstruktur (6, 60) integraler Bestandteil des Gehäuses (1) ist.

7. Rotatorische Positionsmeßeinrichtung nach Anspruch 6, wobei die Abtastteilungsstruktur (6, 60) als geätzte Struktur am Gehäuse (1) ausgebildet ist.

8. Rotatorische Positionsmeßeinrichtung nach Anspruch 1, wobei die Abtästteilungsstruktur (6, 60) als Prägung auf einer dünnen Folie ausgebildet ist und die Folie flächig am Gehäuse (1) angeordnet ist.

9. Rotatorische Positionsmeßeinrichtung nach Anspruch 1, wobei benachbart zur Abtastteilungsstruktur (6, 60) eine Blendenstruktur (20) in Form einer absorbierenden Schicht angeordnet ist.

10. Rotatorische Positionsmeßeinrichtung nach Anspruch 1, wobei das Gehäuse (1) zylinderfömig ausgebildet ist und einen Flansch aufweist, an dem die Abtastteilungsstruktur (6, 60) angeordnet ist.

11. Rotatorische Positionsmeßeinrichtung nach Anspruch 1, wobei die Meßteilungsstruktur (9, 90) als Phasengitter mit alternierend angeordneten Stegen und Lücken ($S_M$, $L_M$) ausgebildet ist und für die Stegbreite $b_{SM}$ entweder $b_{SM} = 1/3\ TP_M$ oder $b_{SM} = 2/3\ TP_M$ gilt, wobei $TP_M$ die Teilungsperiode des Phasengitters bezeichnet.

12. Rotatorische Positionsmeßeinrichtung nach Anspruch 11, wobei für die Steghöhe der Meßteilungsstruktur die Beziehung $h_{SM}(n - 1) = \lambda/3$ gilt und n den Brechungsindex des Stegmateriales bezeichnet, während $\lambda$ die Wellenlänge der eingesetzten Lichtquelle angibt.

13. Rotatorische Positionsmeßeinrichtung nach Anspruch 12, wobei die Abtastteilungsstruktur (6, 60) als Phasengitter mit alternierend angeordneten Stegen und Lücken ($S_A$, $L_A$) ausgebildet ist und die Stegbreite $b_{SA}$ der Lückenbreite $b_{LA}$ entspricht.

14. Rotatorische Positionsmeßeinrichtung nach Anspruch 13, wobei für die Steghöhe $h_{SA}$ der Abtastteilungsstruktur $h_{SA} = \lambda/4$ gilt und $\lambda$ die Wellenlänge der eingesetzten Lichtquelle angibt.

15. Rotatorische Positionsmeßeinrichtung nach Anspruch 1, wobei die Abtastbaueinheit (7) auf einer kreisförmigen Platine (8) angeordnet ist, die im Flansch des Gehäuses befestigt ist.

16. Rotatorische Positionsmeßeinrichtung nach Anspruch 1, wobei die Abtastteilungsstruktur auf einem Ausgleichskörper am Gehäuse angeordnet ist, der wiederum verdrehsicher und radial mit dem verschiebbar mit dem Gehäuse verbunden ist.

**Claims**

1. Rotary encoder according to the interferential action principle, comprising

   - a housing (1),
   - a scanning unit (7), which is connected to the housing (1) and which comprises a light source (7.1) as well as at least one detector element (7.2a, 7.2b, 7.2c; $DET_0$, $DET_{+1}$, $DET_{-1}$),
   - a reflection scanning graduation structure (6, 60) disposed directly on the housing (1), which is insensitive to vibration, and disposed opposite the scanning unit (7),
   - a graduated disc (5), which is connected to a rotatable shaft (2) and has a radial transmission measurement graduation structure (9, 90), wherein the graduated disc (5) is arranged in the housing (1) to be rotatable around its axis of symmetry (3), so that the measurement graduation structure (9, 90) is located between the scanning unit (7) and the scanning graduation structure (6, 60), and
   - the arrangement of the light source (7.1) and the measurement graduation structure (9, 90) is selected in such a manner that the beams emitted by the light source (7.1) firstly pass onto the measurement graduation structure, where splitting into diffracted beam components (0, +1, -1) of different orders occurs, the diffracted beam components (0, +1, -1) strike the scanning graduation structure (6, 60), where a renewed diffraction into different diffraction orders occurs under reflection and a back-reflection of the diffracted beam components (+1', -1') in the direction of the measurement graduation structure (9, 90) results, where diffracted beam components (+1', - I') interfere and the interfering beam components are detected via at least one detector element (7.2a, 7.2b, 7.2c; $DET_0$, $DET_{+1}$, $DET_{-1}$).

2. Rotary encoder according to Claim 1, wherein the scanning graduation structure (6, 60) is fastened flat on the housing (1).

3. Rotary encoder according to Claim 2, wherein the scanning graduation structure (6, 60) is glued to the housing (1).

4. Rotary encoder according to Claim I, wherein the scanning graduation structure (6, 60) is disposed only in one circle segment.

5. Rotary encoder according to Claim 1, wherein the scanning graduation structure is disposed in a circular ring shape on the housing.

6. Rotary encoder according to Claim 1, wherein the scanning graduation structure (6, 60) is an integral component of the housing (1).

7. Rotary encoder according to Claim 1, wherein the scanning graduation structure (6, 60) is configured on the housing (1) as an etched structure.

8. Rotary encoder according to Claim 1, wherein the scanning graduation structure (6, 60) is configured as a stamped structure on a thin foil and the foil is disposed flat on the housing (1).

9. Rotary encoder according to Claim 1, wherein a diaphragm structure (20) in the form of an absorbent layer is arranged adjacent to the scanning graduation structure (6, 60).

10. Rotary encoder according to Claim 1, wherein the housing (1) is cylindrical and has a flange, on which the scanning graduation structure (6, 60) is disposed.

11. Rotary encoder according to Claim 1, wherein the measurement graduation structure (9, 90) is configured as a phase grating with alternately arranged ties and gaps ($S_M$, $L_M$) and for the tie width $b_{SM}$ either $b_{SM} = 1/3\,TP_M$ or $b_{SM} = 2/3\,TP_M$ applies, wherein $TP_M$ represents the graduation period of the phase grating.

12. Rotary encoder according to Claim 11, wherein for the tie height of the measurement graduation structure the equation $h_{SM}(n-1) = \lambda/3$ applies, and n represents the refractive index of the tie material, whereas $\lambda$ represents the wavelength of the light source used.

13. Rotary encoder according to Claim 12, wherein the scanning graduation structure (6, 60) is configured as a phase grating with alternately arranged ties and gaps ($S_A$, LA) and the tie width $b_{SA}$ corresponds to the gap width $L_{SA}$.

14. Rotary encoder according to Claim 13, wherein for the tie height $h_{SA}$ of the scanning graduation structure $h_{SA} = \lambda/4$ applies and $\lambda$ indicates the wavelength of the light source used.

15. Rotary encoder according to Claim 1, wherein the scanning unit (7) is disposed on a circular plate (8), which is fastened in the flange of the housing.

16. Rotary encoder according to Claim 1, wherein the scanning graduation structure is disposed on a compensation body on the housing, which is itself fixed against relative rotation and is connected to the housing to be radially displaceable.


**Revendications**

1. Dispositif de mesure de position rotatif fonctionnant selon le principe d'action interférentiel, comprenant

   - un boîtier (1)?
   - une unité de palpage (7) qui est liée au boîtier (1) et comporte une source lumineuse (7.1) ainsi qu'au moins un élément détecteur (7.2a, 7.2b, 7.2c; $DET_0$, $DET_{+1}$, $DET_{-1}$),
   - une structure formant graduation de palpage à réflexion (6, 60) qui est disposée directement sur le boîtier (1) insensible aux vibrations, en vis-à-vis de l'unité de palpage (7),
   - un disque gradué (5) qui est lié à un arbre (2) tournant et présente une structure formant graduation de mesure à transmission (9, 90) radiale, dans lequel le disque gradué (5) est monté dans le boîtier (1) avec possibilité de rotation autour de son axe de symétrie (3), de sorte que la structure de graduation de mesure (9, 90) se situe entre l'unité de palpage (7) et la structure de graduation de palpage (6, 60), et
   - la disposition de la source lumineuse (7.1) et de la structure de graduation de mesure est choisie telle que les faisceaux lumineux émis par la source lumineuse (7.1) arrivent d'abord sur la structure de graduation de mesure (9, 90), où ils subissent une division en faisceaux de rayons partiels (0, +1, -1) diffractés de différents ordres, les faisceaux de rayons partiels (0, +1, -1) diffractés arrivent sur la structure de graduation de palpage (6, 60) où il se produit une nouvelle diffraction, avec réflexion, en différents ordres de diffraction et une réflexion en retour des faisceaux de rayons partiels (+1', -1') en direction de la structure de graduation de mesure (9, 90), où les faisceaux de rayons partiels (+1', -1') diffractés interfèrent les uns avec les autres, et une détection des faisceaux de rayons partiels en interférence est opérée par l'élément détecteur (7.2a, 7.2b, 7.2c; $DET_0$, $DET_{+1}$, $DET_{-1}$), au nombre d'au moins un.

2. Dispositif de mesure de position rotatif selon la revendication 1, dans lequel la structure de graduation de palpage (6, 60) est fixée à plat au boîtier (1).

3. Dispositif de mesure de position rotatif selon la revendication 2, dans lequel la structure de graduation de palpage (6, 60) est fixée au boîtier (1) par collage.

4. Dispositif de mesure de position rotatif selon la revendication 1, dans lequel la structure de graduation de palpage (6, 60) est disposée seulement dans un segment de cercle.

5. Dispositif de mesure de position rotatif selon la revendication 1, dans lequel la structure de graduation de palpage est disposée sous forme d'anneau de cercle sur le boîtier.

6. Dispositif de mesure de position rotatif selon la revendication 1, dans lequel la structure de graduation de palpage (6, 60) fait partie intégrante du boîtier (1).

**7.** Dispositif de mesure de position rotatif selon la revendication 6, dans lequel la structure de graduation de palpage (6, 60) est réalisée par attaque chimique sur le boîtier (1).

**8.** Dispositif de mesure de position rotatif selon la revendication 1, dans lequel la structure de graduation de palpage (6, 60) est réalisée sous la forme d'un estampage dans un film mince et ce film mince est appliqué à plat sur le boîtier (1).

**9.** Dispositif de mesure de position rotatif selon la revendication 1, dans lequel une structure de masque (20) réalisée sous la forme d'une couche absorbante est disposée dans le voisinage de la structure de graduation de palpage (6, 60).

**10.** Dispositif de mesure de position rotatif selon la revendication 1, dans lequel le boîtier (1) a une forme cylindrique et présente une cavité, au fond de laquelle est disposée la structure de graduation de palpage (6, 60).

**11.** Dispositif de mesure de position rotatif selon la revendication 1, dans lequel la structure de graduation de mesure (9, 90) est réalisée comme réseau de phase, comportant des barrettes et des sillons ($S_M$, $L_M$) disposés en alternance, et la largeur de barrette $b_{SM}$ est définie soit par $b_{SM} = 1/3\ TP_M$ soit par $b_{SM} = 2/3\ TP_M$, $TP_M$ désignant la période de division du réseau de phase.

**12.** Dispositif de mesure de position rotatif selon la revendication 11, dans lequel la hauteur de barrette de la structure de graduation de mesure est définie par la relation $h_{SM}(n-1) = \lambda/3$, n désignant l'indice de réfraction du matériau de barrette et $\lambda$ indiquant la longueur d'onde de la source lumineuse utilisée.

**13.** Dispositif de mesure de position rotatif selon la revendication 12, dans lequel la structure de graduation de palpage (6, 60) est réalisée sous forme de réseau de phase, comportant des barrettes et des sillons ($S_A$, $L_A$) disposés en alternance, et la largeur de barrette $b_{SA}$ correspond à la largeur de sillon $b_{LA}$.

**14.** Dispositif de mesure de position rotatif selon la revendication 13, dans lequel la hauteur de barrette $h_{SA}$ de la structure de graduation de palpage est définie par $h_{SA} = \lambda/4$, $\lambda$ indiquant la longueur d'onde de la source lumineuse utilisée.

**15.** Dispositif de mesure de position rotatif selon la revendication 1, dans lequel l'unité de palpage (7) est disposée sur une plaque (8) circulaire qui est fixée dans la cavité du boîtier.

**16.** Dispositif de mesure de position rotatif selon la revendication 1, dans lequel la structure de graduation de palpage est disposée sur un corps de compensation sur le boîtier, lequel corps est lié au boîtier en étant bloqué en rotation et mobile dans la direction radiale.

FIG. 1

Fig. 5

7.2a    8

7.1

7

7.3

9

6

1

Fig. 5

4a    2    4b

3

DET$_{-1}$    DET$_0$    LQ    DET$_0$    DET$_{+1}$

FIG. 2

90

-1    +1

0

-1'    -1''    +1''    +1'

60

## FIG. 3a

## FIG. 3b

FIG. 4a

11    20

1

6

FIG. 4b

$S_A$    $L_A$    $TP_A$    $b_{SA}$    $b_{LA}$

6

6.1    $h_{SA}$

FIG 5

FIG. 6